# EUROPEAN PATENT SPECIFICATION

(11) **EP 2 787 698 B1**
(45) Date of publication and mention of the grant of the patent: **29.01.2020**
(21) Application number: 14153026.1
(22) Date of filing: 29.01.2014
(51) Int. Cl.: H04L 12/715, H04L 12/721, H04L 12/24

(54) **A method and network for incremental deployment of software-defined networking into an enterprise network**
Verfahren und Netzwerk zum inkrementalen Einsatz von softwaredefinierter Vernetzung in einem Unternehmensnetzwerk
Procédé et réseau permettant le déploiement par incréments de réseaux logicielle dans un réseau d'entreprise

(30) Priority: 03.04.2013 EP 13162176
(43) Date of publication of application: 08.10.2014
(73) Proprietor: Deutsche Telekom AG, 53113 Bonn (DE)
(72) Inventor: Daniel Levin, D-10553 Berlin (DE); Marco Canini, D-10625 Berlin (DE); Stefan Schmid, D-10405 Berlin (DE); Anja Feldmann, D-10717 Berlin (DE)
(74) Representative: Vossius & Partner Patentanwälte Rechtsanwälte mbB

(56) References cited:
- EP-A2- 1 005 194
- US-A1- 2013 070 762
- Dan Levin ET AL: "Panopticon: Reaping the Benefits of Partial SDN Deployment in Enterprise Networks", , 15 May 2013 (2013-05-15), XP055119217, Berlin Retrieved from the Internet: URL:http://www.net.t-labs.tu-berlin.de/~st efan/panopticon-TR.pdf [retrieved on 2014-05-21]
- DAS TAMAL ET AL: "An agent-based modeling approach of network migration to new technologies", 2013 IEEE INTERNATIONAL CONFERENCE ON COMMUNICATIONS (ICC), IEEE, 9 June 2013 (2013-06-09), pages 2583-2588, XP032522438, ISSN: 1550-3607, DOI: 10.1109/ICC.2013.6654924 [retrieved on 2013-11-04]

## Description

The present invention generally relates to computer networks, and in particular to networks that are operated using Software-defined Networking.

Mid to large networks, such as enterprise campus networks serving hundreds to thousands of users, present complex operational requirements: The network must operate reliably and provide high-performance connectivity to a wide range of devices while enforcing organizational policy isolation across complex boundaries. The enterprise thus represents a challenging environment for network management. Nevertheless, enterprise networks' operations largely rely on cumbersome and error-prone approaches that require labor-intensive configuration tasks by trained operators

Software-Defined Networking (SDN) has the potential to provide a principled solution to both simplify management and enhance flexibility of the network. SDN is a paradigm that offers a programmatic, logically-centralized interface for specifying the intended network behavior. Through this interface, a software program acts as a network controller by configuring forwarding rules on switches and reacting to topology and traffic changes.

Enterprises stand to benefit from SDN on many different levels, including: (i) network policy can be declared over high-level names and enforced dynamically at fine levels of granularity (ii) policy can dictate the paths over which traffic is directed, facilitating middlebox enforcement and enabling greater network visibility, (iii) policy properties can be verified for correctness, and (iv) policy changes can be accomplished with strong consistency properties, eliminating the chances of transient policy violations.

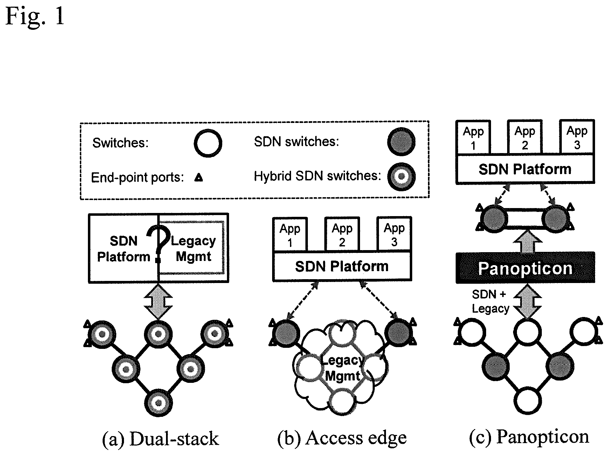

Existing enterprises that wish to leverage SDN however, face the problem of how to deploy it. SDN is not a "drop-in" replacement for the existing network: SDN redefines the traditional, device-centric management interface and requires the presence of programmable switches in the data plane. Consequently, the path to migrate to SDN creates new opportunities as well as considerable challenges:
Known approaches for upgrading networks to transitional SDN deployed networks are schematically illustrated in Fig. 1(a) and (b).

As a first approach shown in Fig. 1(a), a dual-stack approach partitions the flow space into several disjoint slices and assigns each slice to either SDN or legacy processing. This is described, for example, in N. McKeown, T. Anderson, H. Balakrishnan, G. Parulkar, L. Peterson, J. Rexford, S. Shenker, and J. Turner, "OpenFlow: enabling innovation in campus networks", SIGCOMM CCR, 38(2), 2008. Individual traffic flows of interest may be explicitly selected for SDN processing. This mode's prime limitation is that it does not in itself address how the legacy and SDN control planes should interact, nor how to operate the resulting network as an SDN. Further, this approach necessitates a contiguous deployment of hybrid programmable switches capable of processing packets according to both legacy and SDN mechanisms.

The second approach illustrated in Fig. 1(b) involves deploying SDN at the network access edge, as described, e.g., in M. Casado, T. Koponen, S. Shenker, and A. Tootoonchian, "Fabric: a retrospective on evolving SDN", in HotSDN, 2012. This mode has the benefit of enabling full control over the access policy and the introduction of new network functionality at the edge, e.g., network virtualization. Unlike a data-center environment where the network edge may terminate at the VM hypervisor, the campus network edge terminates at an access switch. In an enterprise network, this approach thus involves upgrading thousands of access switches and incurs a high cost. SDN deployment limited to the edge additionally impairs the ability to control forwarding decisions within the core of the network (e.g., load balancing, waypoint routing).

Moreover, the network management simplification benefits of both these approaches do not extend beyond the SDN deployment to the legacy devices.

US 2013/0070762 discloses a system and methods for controlling network traffic through virtual switches.

There is a need for an improved method to incrementally deploy an existing network to a SDN network. The method should provide the network with the benefits of a fully deployed SDN network without the necessity to fully upgrade the network. Specifically, the invention should allow realizing an SDN control plane in a network that combines legacy switches and routers and incrementally deployable SDN switches.

These objects are achieved with the features of the claims.

Accordingly, the present invention provides a method of operating a network comprising legacy switches and software-defined networking, SDN, switches with a plurality of switchports. The plurality of switchports in the network is divided into a set of SDN ports and a set of legacy ports. However, a SDN ports it is not necessarily physically located on an SDN switch. Rather, a SDN port may be connected to a SDN switch or a legacy switch. The network traffic is controlled such that traffic to and/or from any one of the SDN ports passes through at least one of the SDN switches. Thereby, the method provides an abstraction of the network into a logical software-defined network.

The legacy switches in the network may further be divided into a plurality of cell blocks, wherein the border of each one of the cell blocks consists of SDN switches among the plurality of SDN switches in the network. The traffic in the network may then be isolated to spanning trees defined within each one of the cell blocks and the SDN switches at its border. A unique identification may be assigned to each one of the spanning trees within each cell block. Across different ones of the cell blocks the identifications may be reused.

The present invention is further directed to a network comprising a plurality of legacy switches and a plurality of software defined networking, SDN, switches with a plurality of switchports. Among the plurality of switchports, a set of switchports is selected as SDN switchports and the remaining switchports are selected as legacy switchports. Switchports of the SDN switches and/or the legacy switches may be selected as SDN ports. The traffic in the network is controlled in such a way that traffic to and/or from any one of the SDN ports passes through at least one of the SDN switches. Thereby, the network is abstracted into a logical software-defined network. For controlling the network, a SDN controller may be used. Alternatively, a SDN controller hypervisor may be arranged between the network and a standard network controller. The SDN controller hypervisor may be provided as an additional, remote controller or by a software library or a software module.

The controller used in the network, i. e. the SDN controller or the SDN controller hypervisor, may further be configured to dividing the legacy switches in the network into a plurality of cell blocks, wherein the border of each one of the cell blocks consists of SDN switches among the plurality of SDN switches in the network. Thereby, isolation of the traffic to spanning trees defined within each one of the cell blocks and the SDN switches at its border may be achieved. A unique identification may be assigned to each one of the spanning trees within each cell block, wherein the identifications are reused across different ones of the cell blocks.

For planning incremental deployment of a network comprising legacy switches, a non-claimed tool for selecting a number of legacy switches in a network to be replaced by SDN switches in order to incrementally deploy the network to a partially deployed network may be employed. The selection may be based on an optimization regarding costs for the replacement of the selected switches and the performance of the network and takes into account the necessity that any path that includes SDN ports must traverse at least one of the SDN switches, the need for SDN switches to have sufficient forwarding capacity to support all paths assigned to them and the efficiency of the resulting traffic flow allocations, the efficiency being estimated using path stretch and expected maximum load on any link in the network, the path stretch being the ratio between the length of a path between two ports including at least one SDN switch and the length of the shortest path between these ports in the network.

Using the tool, a number of the legacy switches present in the network is selected and the selected legacy switches are replaced by SDN switches. The resulting partially deployed network can then be operated according to the present invention.

The present invention may be implemented in the framework of "Panopticon", an architecture for operating networks that combine legacy and incrementally upgraded SDN switches. Such a network may be called a transitional network. Panopticon exposes an abstraction of a logical SDN in a partially upgraded legacy network, where the SDN benefits extend potentially over the entire network.

In the following, embodiments of the present invention will be described in more detail with reference to the Figures, wherein
- Fig. 1: shows a comparison between known transitional network approaches and the present invention, wherein (a) illustrates the dual-stack approach, (b) illustrates the full edge SDN deployment, and (c) illustrates a partially-deployed SDN according to an embodiment of the present invention;
- Fig. 2: exemplarily shows various forwarding paths in a network according to an embodiment of the present invention;
- Fig. 3: shows an example transitional network of 8 switches, including 2 SDN switches, wherein (a) shows the Solitary Confinement Trees of every SDN ports overlaid to the physical topology, and (b) presents the corresponding logical view in which all SDN ports are virtually connected to SDN switches via pseudo-wires;

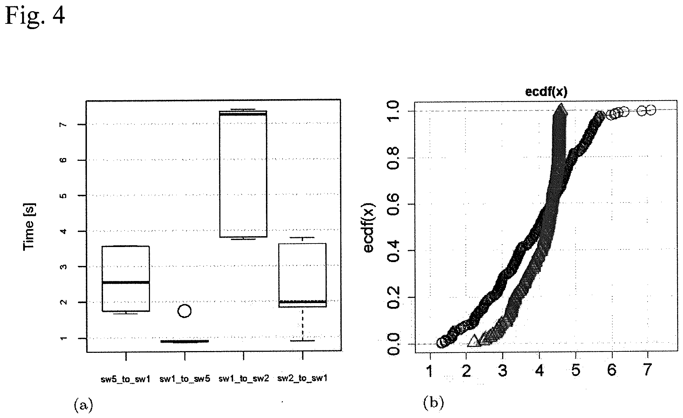

- Fig. 4: shows results of Panopticon implementation experiments; and
- Fig. 5: shows results of a simulation-assisted study of SDN employment according to an embodiment of the invention.

The operational challenges posed in existing networks, such as enterprise networks, present an appealing opportunity for automated orchestration of the network. Software-Defined Networking (SDN) is a promising approach. However, since it is not possible to upgrade all portions of the network simultaneously, realizing solutions built on SDN in the enterprise faces the deployment problem. Specifically, various constrains have to be taken into account.

Rather than a green field, network upgrade usually starts with the existing deployment and is typically a staged process-budgets are constrained, and only a part of the network can be upgraded at a time. Furthermore, network operations play a mission-critical role in today's enterprises. Without the necessary confidence, operators are highly unlikely to replace all production control protocols with an SDN control plane as a single "flag-day" event, even if all deployed switches already support SDN programmability. Rather, it is desirable to gradually widen the scope of the SDN deployment in terms of traffic and devices.

Rearchitecting the network is a significant undertaking. Generally, it is assumed that implementing a software-defined network only yields benefits after a complete overhaul of the network hardware. The main motivating factors underlying the deployment of SDN in enterprise networks are simplifying management and enhancing network flexibility. However, most enterprises cannot afford this level of commitment and need earlier return on investment. The sooner in the migration process that SDN demonstrates ability to solve relevant problems, the more likely it is to be adopted.

In order to further illustrate the present invention, the following description presents, as an exemplary embodiment of the present invention, "Panopticon" which is an architecture for realizing a SDN control plane in a transitional network. As illustrated in Fig. 1(c), Panopticon yields an interface for a partially-deployed SDN that acts like a full SDN deployment. Panopticon abstracts the transitional network into a logical SDN, extending SDN capabilities potentially over the entire network.

Panopticon is based in the insight that the benefits of SDN to enterprise networks can be realized for every source-destination path that includes at least one SDN switch. Thus, a full SDN switch deployment is not required-a small subset of all switches may suffice. Conceptually, a single SDN switch traversed by each path is sufficient to enforce end-to-end network policy (e.g., access control). Moreover, traffic which traverses two or more SDN switches may be controlled at finer levels of granularity enabling further customized forwarding decisions e.g., shifting to a lightly loaded path. Based on this insight, a mechanism called the Solitary Confinement Tree (SCT) is provided, which uses VLANs to ensure that traffic destined to operator selected switchports on legacy devices passes through at least one SDN switch.

Combining mechanisms available in legacy switches, SCTs create a spanning tree connecting each of these switchports to SDN switches while overcoming VLAN scalability limitations. A natural consequence of redirecting traffic to SDN switches is an increase in certain path lengths and link utilizations. The tool of the present invention ensures deployment planning that carefully considers to mind forwarding state capacities and to avoid introducing choke points. Although existing enterprise networks may already regularly divert traffic to traverse a VLAN gateway or a middlebox, Panopticon fundamentally integrates legacy and SDN switches yielding the abstraction of a logical SDN, as opposed to the known dual-stack approach. With the present invention, many SDN control paradigms can be achieved.

Panopticon enables the expression of any end-to-end policy, as though the network were one big, virtual switch. Routing and path-level policy, e.g. traffic engineering, can be expressed too. As more of the switches are upgraded to support SDN, more fine-grained path-level policies can be expressed.

While commercial SDN deployment started within data-centers and the WAN, the roots of today's SDN arguably go back to the needs of enterprise networks. The following description focuses on mid to large enterprise campus networks, i.e., networks serving hundreds to thousands of users, whose infrastructure is physically located at a campus site. This environment is chosen due to its challenging complexity as well as the impact potential that SDN network orchestration promises. However the present invention is not limited to such networks and can be advantageously applied to other networks as well.

Generally, important technical, operational objectives to network operators are: (1) That it "just works", implying basic, usable IP connectivity for employees to conduct their business, (2) that strict traffic filtering and perimeter protection be maintained against intrusion and system exploit, and (3) to minimize operational costs and complexity, e.g., by maintaining homogeneous hardware deployments with vendor-specific management tools. Usually, one of the most demanding operational challenges faced in the network is related to maintaining a consistent view of the network's physical and configuration state. Network capacity bottlenecks however rarely present problems.

Therefore, for the present invention, the following assumptions about mid to large enterprise campus networks and hardware capabilities may be made. Enterprise network hardware consists primarily of Ethernet bridges, namely, switches that implement standard L2 mechanisms *(i.e*., MAC-based learning and forwarding, and STP) and support VLAN (specifically, 802.1Q and per VLAN STP). Routers or L3 switches are used as gateways to route between VLAN-isolated IP subnets. Furthermore, it is assumed that a L3 switch is also capable of functioning as a L2 switch. In addition, it is assumed that no enterprise intentionally operates "flood-only" hub devices for general packet forwarding.

The architecture for realizing an SDN control plane for incrementally deployable software defined networks will now be described. Specifically, the goal is to abstract the physical network into a logical SDN that offers a centralized interface based on programmable match-action forwarding behavior at the SDN switches, and extends the SDN capabilities to ports on legacy switches. Panopticon can extend SDN capabilities to potentially every switchport in the network; however not every port needs to be included in this logical SDN. Rather, an operator may conservatively choose to deploy Panopticon only in part of the network at first, to build confidence and reduce up-front capital expenditure, and then iteratively expand the deployment.

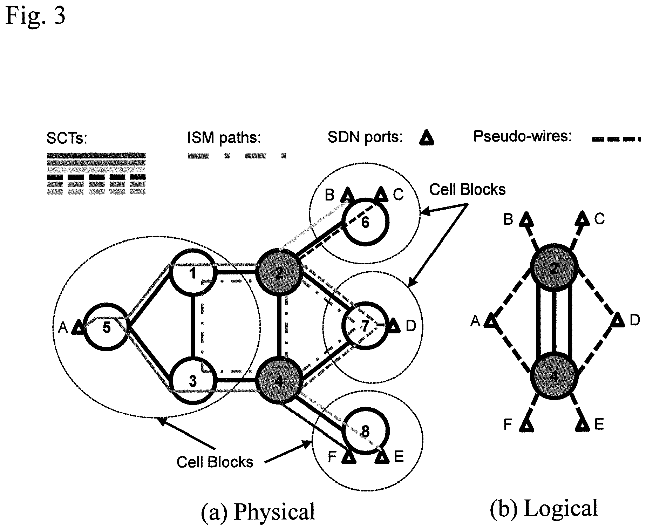

An example transitional network of 8 switches is shown in Fig. 3, the SDN switches being shaded. To accommodate iterative expansion of the logical SDN, the set of switchports in the network is divided into *SDN ports*, that is, those that need to be exposed to and controlled through the logical SDN and *legacy ports*, those that are not. Note that while an SDN port is conceptually an access port to the logical SDN network, it is not necessarily physically located on an SDN switch (see port *A* in Figure 3): It may be connected to an end-host or a legacy access switch.

SDN capabilities are extended to legacy switches by ensuring that all traffic to or from an SDN port is always restricted to a *safe end-to-end path,* that is, a path that traverses at least one SDN switch. This cornerstone property of this architecture may be called *Waypoint Enforcement.* The key challenge to guaranteeing Waypoint Enforcement is that one may rely *only on existing mechanisms and features readily available* on legacy switches.

Panopticon uses VLANs to restrict forwarding to guarantee Waypoint Enforcement, as these are ubiquitously available on legacy enterprise switches. To conceptually illustrate how, one may first considers a straightforward, yet less practical scheme: For every pair of ports which includes at least one SDN port, choose one SDN switch as the waypoint, and compute the (shortest) end-to-end path that includes the waypoint. Next, assign a unique VLAN ID to every end-to end path and configure the legacy switches accordingly. This ensures that all forwarding decisions made by every legacy switch only send packets along safe paths. However, such a solution is hardly feasible, as the VLAN ID space is usually limited to 4096 values, and often fewer are supported in hardware. Furthermore, such a rigid solution limits the opportunity to use the best path to the destination according to load and cripples fault tolerance.

To realize guaranteed waypoint enforcement in Panopticon, the concept of a *Solitary Confinement. Tree* (SCT) may be introduced: a scalable waypoint enforcement mechanism that provides end-to-end path diversity. First, the concepts of cell block and frontier are introduced. Intuitively, the role of a cell block is to divide the network into isolated islands where VLAN tags can be reused. The border of a cell block consists of SDN switches and is henceforth called the frontier.

**Definition 1** (Cell Blocks): *Given a transitional network G,* Cell Block *CB(G) is defined as the* set of connected components *of the network obtained after removing from G the SDN switches and their incident links*

**Definition 2** (Frontier): *Given a cell block c ∈ CB(G), the* Frontier F(c) *is defined as the subset of SDN switches that are adjacent in G to a switch in c.*

Intuitively, the solitary confinement tree is a spanning tree within a cell block, *plus* its frontier. A SCT may further connect to a subset of the frontier to further improve scalability. The principle role of each SCT is to provide a safe path from each SDN port p to every SDN switch S in its frontier. A single VLAN ID can then be assigned to each SCT which ensures traffic isolation, provides per-destination path diversity, and allows VLAN ID reuse across cell blocks. Formally, SCT is defined as:

**Definition 3** (Solitary Confinement Tree): *Let c(**p**) be the cell block to which an SDN port p belongs. And let* ST(c(p)) *denote a spanning tree on c(p). Then, the* Solitary Confinement Tree SCT(p) *is the network obtained by augmenting* ST(c(p)) *with the frontier F(c(p)), together with all links in c(p) connecting a switch u* ∈ *F(c(p)) with a switch in* SCT(p)

As an example, the transitional network of eight switches in Figure 3(a) may be considered. In this example, SCT (A) is the tree that consists of the paths 5 → 1 →2 and 5 → 3 → 4. Instead note that SCT (*B*), which corresponds to the path 6 → 2, includes a single SDN switch because switch 2 is the only SDN switch adjacent to cell block *c(B).* Figure 3(b) shows the corresponding logical view of the physical transitional network enabled by having SCTs. In this logical view, every SDN port is connected to at least one SDN switch via a pseudo-wire (realized by the SCT).

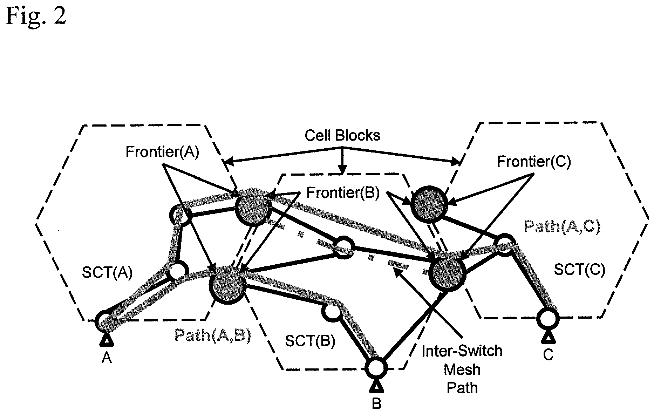

Panopticon's basic forwarding behavior will now be described with reference to Figure 2. As in any SDN, the control application is responsible for installing the necessary forwarding state at the SDN switches *(e.g*., in accordance with the access policy) and for reacting to topology changes (fault tolerance will be discussed below).

Considering traffic between a pair of SDN ports *s* and *t* in Fig. 2, when a packet from *s* enters SCT(s), the legacy switches forward the packet to the frontier based on MAC-learning which establishes a symmetric path. A packet from *s* may use a different path within SCT(s) to the frontier for each distinct destination. Once traffic toward *t* reaches its designated SDN switch *u* ∈ *F(c(s)),* one of two cases arises:
**SDN switches act as VLAN gateways:** This is the case when the destination SDN port *t* belongs to a cell block whose frontier *F(c(t))* shares at least one switch *u* with *F(c(s)).* Switch *u* acts as the designated gateway between SCT(s) and SCT(t): That is, *u* rewrites the VLAN tag and places the traffic within SCT(t). For instance, in the example of Figure 3(a), switch 2 acts as the gateway between ports *A, B* and *C*.
**Inter-Switch Mesh (ISM):** When no SDN switch is shared, an *Inter- Switch Mesh (ISM) path* is used: point-to-point, VLAN-based tunnels that realize a full mesh between SDN switches. In this case, the switch *u* chooses one of the available paths to forward the packet to an SDN switch *w* ∈ *F(c(t)),* where *w* is the designated switch for the end-to-end path *p(s,t).* In our example of Figure 3(a), ISM paths are shown in gray and are used *e.g.,* for traffic from *B* or *C* to *E* or *F*, and vice versa.

Regarding the forwarding behavior of legacy ports, two cases may again be distinguished: First, when there exists a path in the legacy network between two legacy ports, forwarding is performed according to the traditional mechanisms and is unaffected by the partial SDN deployment. Policy enforcement and other operational objectives must be implemented through traditional means, *e.g*., ACLs. In the second case, anytime a path between two legacy ports necessarily encounters an SDN switch, the programmatic forwarding rules at the switch can be leveraged to police the traffic. This is also the case for all traffic between any pair of an SDN and a legacy port. In other words, Panopticon always guarantees safe paths for packets from or to every SDN port.

Having described all components of the architecture, certain key properties will now be discussed.

**Key SCT properties.** As one VLAN ID is used per SCT and as VLAN IDs can be reused across Cell Blocks, the scheme also allows a different path to be used within the SCT for every distinct destination. Additionally, SCTs can be statically precomputed (of course, re-computation is needed whenever the physical topology changes).

**ISM path diversity trade-offs.** Within the ISM, there may be multiple paths between any given pair of SDN switches. Some applications may require a minimum number of paths. For example, a minimum of two disjoint paths is necessary, to tolerate single link failures. On the other hand, assuming VLAN-based tunnels, each path consumes a VLAN ID from the ID space of every traversed cell block. Other mechanisms that may be envisaged *(e.g*., IP encapsulation or MAC address rewriting) are possible depending on specific deployment characteristics. Finally, while it is referred to the ISM as a mesh for simplicity, it could be realized otherwise, *e.g*., as a tree backbone.

**Coping with broadcast traffic.** Broadcast traffic can be a scalability concern. The invention takes advantage of the fact that each SCT limits the broadcast domain size, and may rely on SDN capabilities to enable in-network ARP and DHCP proxies. These present important bootstrapping protocols as it was empirically observed that broadcast traffic in enterprise networks is primarily contributed by ARP and DHCP.

Last, in the general case, if broadcast traffic must be supported, the overhead that Panopticon produces is proportional to the number of SCTs in a cell block which, at worst, grows linearly with the number of SDN ports of a cell block.

**Tolerating failures.** Fault tolerance may be decomposed into three orthogonal aspects. First, within an SCT, Panopticon relies on standard STP mechanisms to survive link failures, although to do so, there must exist sufficient physical link redundancy in the SCT. The greater the physical connectivity underlying the SCT, the higher the fault tolerance. Additionally, the coordination between SDN controller and legacy STP mechanisms allows for more flexible fail-over behavior than STP alone. When an SDN switch at the frontier *T* of *SCT* notices an STP re-convergence, we adapt the forwarding decisions at T1 s SDN switches to restore connectivity as necessary. A similar scheme can address link failures within the Inter Switch Mesh (ISM). Second, when SDN switches or their incident links fail, the SDN controller recomputes the forwarding state and installs the necessary flow table entries. Furthermore, precomputed failover behavior can be leveraged using known software. Third, the SDN control platform must be robust and available. In this respect, well-known distributed systems techniques effectively achieve this goal.

By now, it was described how Panopticon shifts the active network management burden away from the legacy devices and onto the upgraded SDN deployment. This conceptually reduces the network to a logical SDN as presented in Figure 3(b). Consequently, one may now want to be able to reason about what types of policy can be specified and which applications can be realized in the transitional network.

Panopticon exposes an SDN abstraction of the underlying partial-SDN deployment. In principle, any control application that runs on a full SDN can be supported in Panopticon since, from the perspective of the application, the network appears as though it were a full SDN deployment consisting of just the SDN switches. In practice, there are certain caveats.

**SDN ports in the logical SDN.** An SDN port in Panopticon is not necessarily physically located at an SDN switch, and it may be attached to multiple SDN switches. Accordingly, the SDN controller must take into account the multiple paths over which an SDN port may be reached from its frontier. Furthermore, in general visibility into how resources are shared on legacy links cannot be guaranteed.

**Logical SDN vs. full SDN.** As an abstraction layer, Panopticon is responsible for hiding the legacy devices and acting as a "network hypervisor" that maps the logical SDN abstraction to the underlying hardware. However, because the global network view is reduced to the set of SDN switches, applications are limited to control the forwarding behavior based on the logical SDN. This should not be viewed strictly as a limitation, as it may be desirable to further abstract the entire network as a single virtual switch over which to define high-level policies *(e.g.,* access policy) and have the controller platform manage the placement of rules on physical switches.

Nevertheless, the transitional network stands to benefit in terms of management simplification and enhanced flexibility as will be illustrated below.

**More manageable networks.** Arguably, as control over isolation and connectivity is crucial in the enterprise context presently considered, an important application of SDN may be *policy enforcement.* In this regard, Panopticon enables operators to define a single network-wide policy, and the controller enforces it dynamically by allowing or preventing communication upon seeing the first packet of a flow as it tries to cross an SDN switch.

The big switch abstraction enables the network to support Ethernet's plug-and-play semantics of flat addressing and, as such, simplifies the handling of host mobility. The ISM represents the network core and SCTs realize the edge. At the boundary between the SCTs and ISM, the SDN switches enable the decoupling of the respective network layers, while ensuring scalability through efficient routing in the ISM.

**More flexible networks.** The controller maintains the global network view and performs route computation for permitted flows. This provides the opportunity to efficiently enforce middlebox-specific traffic steering within the SDN based policy enforcement layer. Integrating middleboxes in Panopticon requires that middleboxes are connected to SDN ports. A logical SDN also enables the realization of strong consistency semantics for policy updates. Although legacy switches do not participate in the consistent network update, at the same time, they do not themselves express network policy-as that forwarding state resides exclusively on SDN switches. Putting it all together, the Panopticon architecture realizes an approach for operating a transitional network as though it were a fully deployed SDN, yielding the benefits of partial SDN deployment for the entire network, not just the part that is upgraded.

### Implementation and Evaluation

To cross-check certain assumptions on which Panopticon is founded, this section describes the implementation and experimental evaluation of a Panopticon prototype. The primary goal of the prototype is to demonstrate feasibility for legacy switch interaction, namely the ability to leverage path diversity within each SCT, and respond to failure events and other behaviors within the SCT.

The prototype is coded in Python and runs as an extension to the POX Open-Flow controller platform. It consists of two main components, namely, a path computation module and a legacy switch interaction module.

**Computing paths.** At the level of the logical SDN, the path computation module reacts to the first packet of every flow and, if the flow is permitted, it uses the global network view to determine the shortest path to the destination. Consequently, it installs the corresponding forwarding rules. The implementation supports two flow definitions: (1) the aggregate of packets between a pair of MAC addresses, and (2) the microflow, *i.e*., IP 5-tuple. As each SDN port may be reached over multiple paths from the SDN switches on its frontier, our prototype takes into account the behavior of STP within the SCT (monitored by the component below) to select the least-cost path based on a source-destination MAC pair.

**Interacting with STP.** The Spanning Tree Protocol (STP) or a variant such as Rapid STP, is used to achieve loop freedom within L2 domains and the prototype interacts with STP in two ways. First, within each SCT, a per-VLAN spanning tree protocol *(e.g*., Multiple STP) rooted at the switch hosting the SCT's SDN port is configured. Forwarding rules are installed at each SDN switch to redirect STP traffic to the controller, which interprets STP messages to learn the path cost between any switch on the frontier and the SCT's SDN port, but *does not reply* with any STP messages. Collectively, this behavior guarantees that each SCT is loop free. When this component notices an STP re-convergence, it notifies the path computation module, which in turns adapts the forwarding decisions at SDN switches to restore connectivity as necessary. Second, to ensure network-wide loop freedom for traffic from legacy ports, SDN switches behave as ordinary STP participants. When supported, this is achieved by configuring STP on the switches themselves. Otherwise, Panopticon can run a functionally equivalent implementation of STP.

The prototype is deployed on a network of hardware switches comprising two NEC IP8800 OpenFlow switches and one Cisco C3550XL, three Cisco C2960G, and two HP 5406zl MAC-learning Ethernet switches, interconnected as in Figure 3. To emulate 6 hosts (*A* through *F*), an 8-core server with an 8-port 1 Gbps Ethernet interface is used which connects to each SDN port on the legacy switches depicted in Figure 3. Two remaining server ports connect to the OpenFlow switches for an out-of-band control channel.

A first experiment was conducted to demonstrate how Panopticon recovers from an STP re-convergence in an SCT, and adapts the network forwarding state accordingly. To this purpose, 4 link failure scenarios have been emulated between links (5,1) and (1,2) by disabling the respective source ports of each directed link. Host *A* initiated an iperf session over switch 2 to host *D*. After 10 seconds into the experiment, a link failure was induced, triggering an STP re-convergence.

The resulting BDPU updates were observed by the controller and connectivity to host *D* was restored over switch 4. According to the experiment, Panopticon quickly restored reachability after the failure event. Of interest, it was observed that Panopticon reacts faster to link changes that are detected via STP reconvergence than link changes at the OpenFlow switches themselves.

Further, a second experiment was conducted to explore how the SCT impacts the performance of a BitTorrent file transfer conducted among the hosts attached to SDN ports. To begin this experiment a 100MB file was seeded at one host *(A* through *F),* in an iterative fashion. All other hosts were then initialized to begin simultaneously downloading the file from the seeder and amongst one another. Each transfer was repeated 10 times, and the time for each host to complete the transfer was measured. Then, each time was compared with an identical transfer in a L2 spanning tree topology. As a result, some of the hosts *(i.e*., *A* and *D)* were able to leverage the multi-path forwarding of their SCT to finish sooner. Others, however *(e.g., B, C)* experienced longer transfer times, as their traffic demand shared the same physical link to their frontier switch.

### Incremental SDN Deployment

Panopticon generally makes no assumptions about the partial SDN deployment, that is, the number and placement of SDN switches in the network. In principle, any partial SDN deployment can be abstracted to a logical SDN. However, under practical resource constraints the *feasibility* of the logical SDN abstraction may be untenable as the flow table capacities at the SDN switches and the availability of VLAN IDs on legacy switches are limited.

Besides feasibility, the SDN deployment in general influences network *performance.* By requiring Waypoint Enforcement, SDN switches may act as choke points that increase path lengths and link loads, in some cases beyond admissible values. Therefore, deployment planning requires careful consideration.

How many SDN switches and where to deploy them can be viewed as an optimization problem wherein the objective is to yield a good trade-off between performance and costs subject to feasibility. The present invention provides a tool with configurable parameters and optimized algorithms that may assist operators in planning the deployment by answering questions such as "What is the minimal number of SDN switches needed to support all ports as SDN?" or "Which switches should be first upgraded to SDN to reduce bottleneck link loads?"

The tool and the corresponding method of the present invention takes into account how deployment choices influence feasibility and performance of the resulting network. To navigate the deployment problem space without the need to account for other contextual factors, the focus is set on a few general properties of desirable deployment solutions:
*(i) Waypoint Enforcement:* Any end-to-end path that includes at least one SDN port must traverse one or more SDN switches.
*(ii) Feasible:* SDN switches have sufficient forwarding capacity to support all paths assigned to them. VLAN requirements to realize SCTs are within limits.
*(iii) Efficient:* The resulting traffic flow allocations should be efficient. Efficiency is based on two metrics. The first metric is the path *stretch,* which is defined for a given path *(s,t)* as the ratio between the length of the path under Waypoint Enforcement and the length of the shortest path in the underlying network. The second metric is the expected maximum load on any link.

Different hypothetical partial SDN deployment scenarios are evaluated using three example campus networks. These simulations allows to *(i)* evaluate the scalability limits of the architecture, subject to the available VLAN IDs and SDN flow table resources, *(ii)* explore the extent to which SDN control extends to the overall network, and *(iii)* understand the impact on link utilization and path stretch.

Three upgrade strategies are compared. The first two strategies consider traffic volumes and topological properties, respectively. The third is a baseline strategy where the SDN switches are chosen uniformly at random. The goal is to explore how deployment influences feasibility and performance of the approach. Therefore, simple algorithms are adopted inspired by techniques that are used for many classical problems, such as Knapsack, Facility Location, *etc..*

**Vol** upgrades at every iteration the first switch ranked by decreasing traffic volume between intended SDN ports, subject to flow table and VLAN constraint satisfaction. The underlying intuition is that a switch forwarding large volumes of traffic, is likely to be on many shortest paths between SDN ports, and an upgrade of this switch allows us to accommodate existing paths under Waypoint Enforcement without detour.

**Deg** upgrades at every iteration the first switch ranked by highest number of incident links (ties broken at random), subject to flow table and VLAN constraint satisfaction. Here the intuition is that upgrading high degree switches is likely to yield many cell blocks and therefore improves scalability by allowing VLAN reuse. Note that the choice of each upgraded switch is agnostic to the location of the intended SDN ports.

Because both algorithms are greedy and do not backtrack, it is possible that they terminate prior to satisfying all intended SDN ports, despite the existence of a feasible solution may exist.

The baseline, **Rand,** iteratively picks a legacy switch uniformly at random, subject to flow table and VLAN constraint satisfaction. RAND allows evaluating the sensitivity of the solution to the considered parameters and the potential for sophisticated optimizations to outperform naive approaches.

Besides the upgrade strategies, to simulate a Panopticon deployment, first obtain network topologies, traffic matrices, and resource constraints must be obtained.

**Topologies:** Detailed topological information, including switch and router-level configuration, link capacities, and end-host placements is difficult to obtain: network operators are reluctant to share these details due to privacy concerns. Hence, several publicly available enterprise network topologies are leveraged and the topology of a private, local large-scale campus network. The topologies range from SMALL, comprising just the enterprise network backbone, to a MEDIUM network with 54 distribution switches, to a comprehensive large-scale campus topology derived from anonymized device-level configurations of 1713 L2 and L3 switches. Summary information on the topologies is given in the following Table.

| Site | Access/Dist./Core | max/avg/min degree |
|---|---|---|
| ***LARGE*** | 1293/417/3 | 53/2.58/1 |
| ***MEDIUM*** | -/54/3 | 19/1.05/1 |
| ***SMALL*** | -/14/2 | 15/3/2 |

All links in each topology are annotated with their respective link capacities as well as their switch port densities. Results for all three networks were obtained. The results on the SMALL network gave early confidence in the approach however are omitted as they are not particularly insightful due to the small network size. The results for the MEDIUM network are qualitatively equivalent to the ones for the LARGE network. For the remainder of the discussion, only results for the LARGE network are presented.

**Focus on distribution switches:** It is distinguished between *access switches* (switches of degree one), *distribution switches,* and *core switches.* As core switches are typically very expensive and specialized, and hence are unlikely to be upgraded, it is focused on distribution switches (in the following referred to as the *candidate set* for the upgrade). In case of the LARGE network, this candidate set has cardinality 417. Within this network, legacy network switchports are selected which should be subjected to Waypoint Enforcement as distribution-layer switch ports which lead to individual host-facing access-layer switches. In this topology, 1293 candidate SDN ports are identified.

**Traffic matrices:** A methodology similar to that used in SEATTLE (see C. Kim, M. Caesar, and J. Rexford: "Floodless in Seattle: A scalable ethernet architecture for large enterprises", in SIGCOMM, 2008) to generate a traffic matrix based on actual traces from an enterprise campus network, the *Lawrence Berkeley National Laboratory* (LBNL) (see R. Pang, M. Allman, M. Bennett, J. Lee, V. Paxson, and B. Tierney, "A first look at modern enterprise traffic", in ACM IMC, 2005). The LBNL dataset contains more than 100 hours of anonymized packet level traces of activity of several thousand internal hosts. The traces were collected by sampling all internal switchports periodically. This data is aggregated to obtain estimates of traffic matrix entries. More precisely, for all source-destination pairs in each sample the load they impose on the network is estimated. The data contains sources from 22 subnets.

To project the load onto our topologies, the subnet information is used to partition each of the topologies into subnets as well. Each of these subnets contains at least one distribution switch. In addition, one node is chosen as the Internet gateway. Traffic from each subnet of the LBNL network is associated in random round-robin fashion to candidate SDN ports. Then all traffic within the LBNL network is aggregated to produce the intra-network traffic matrix. All destinations outside of the LBNL network are assumed to be reachable via the Internet gateway and, thus mapped to the designated gateway node. By picking 10 different random assignments, different traffic matrices are generated which are used in the simulations. Before using a traffic matrix it is ensured that the topology is able to support it. For this purpose, the load is projected on the topology using shortest path routes, and scaled such that the most utilized link is at 50% of its nominal link capacity.

**Resource constraints:** Most mid- to high-end enterprise network switches support 512-1024 VLAN IDs for simultaneous use. The maximum number of VLAN IDs expressible in 802.1Q is 4096. Accordingly, all numbers are used as parameters to capture VLAN ID resource constraints, one conservative; one realistic; one optimistic. While first generation OpenFlow capable switches were limited to about 1k flow table entries many current switches support from 10k to 100k entries across TCAM and SRAM. Bleeding edge devices support up to 1m flow table entries. Again, all numbers are used as possible flow table capacity resource constraints, one conservative; two realistic; one optimistic. Unless mentioned otherwise, a setting is assumed where flow table entries are persistently populated along paths that are used, assuming 2, 20 and 200 entries per path. This is a conservative setting; by comparison, if flow table entries were only kept for the duration of their corresponding flows, the maximum number of entries would directly follow from the active flows in the LBNL dataset, which never exceeds 1,200 flows/s.

The first key question is, "what fraction of an enterprise campus network can Panopticon operate as software-defined, given budget and resource constraints for upgrading legacy switches?"

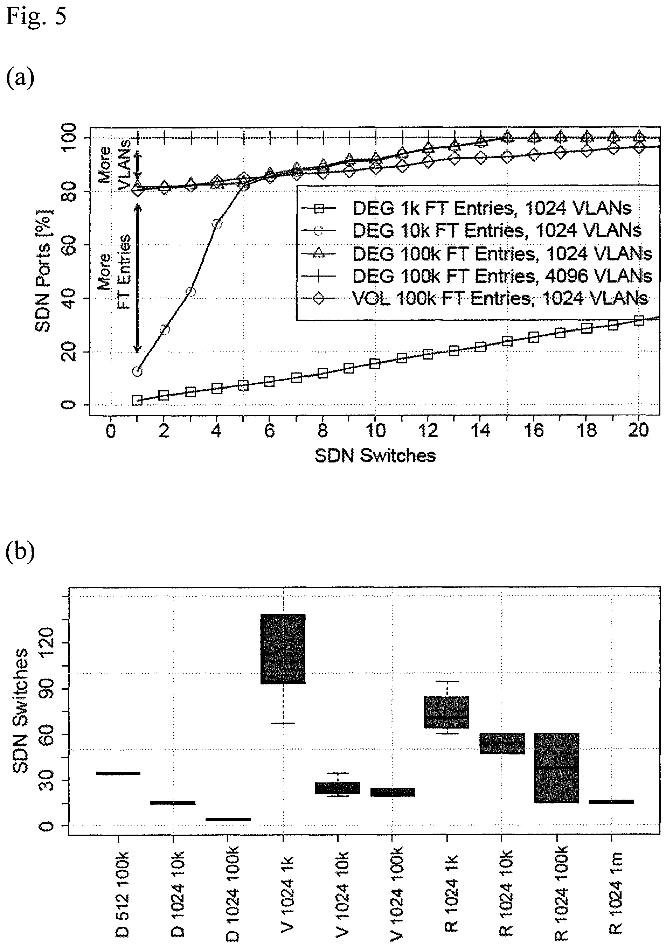

**Scenario 1:** To investigate the interactions between flow table capacity and VLAN ID space 5 iterations (with different random seeds) of both heuristics were run. Both heuristics greedily upgrade one switch at a time subject to the resource constraints, and for each upgrade the number of ports was tracked that can be waypoint enforced. Figure 5(a) plots the corresponding results (average) for different resource parameters. Each point in the graph corresponds to a set of upgraded SDN switches and a specific fraction of ports subjected to SDN waypoint. The exact number of ports that can be SDN waypoint enforced depends on the communication pattern induced by the traffic matrix, however, the spread of the intervals is small.

**Observations 1:** The major take-away from Figure 5(a) is that switch flow table capacity plays a dominant role with regards to what fraction of the enterprise legacy network can be SDN-enabled. In the optimistic case when the switch supports 100,000 entries and 4,096 VLAN IDs the whole network can be SDN enable by upgrading just a single distribution switch. This case, however, may be unrealistic.

With more realistic resource assumptions, namely 10,000 flow entries and 1,024 VLANs over 80% of the legacy ports can be SDN enabled with just five switches. This corresponds to upgrading **just** 1.2% of the distribution switches of the LARGE network.

For the most conservative case (1,000 flow table capacity and 1,024 VLAN IDs) a larger fraction of the network must be upgraded in order to get a reasonable pay-back in terms of SDN enabled ports. 15 switches allow to way-point enforce roughly 20% of the end-ports.

In this scenario, VLAN resource constraints play very little role, as the large number of poorly-endowed switches leads to more connected components and enables better VLAN ID reuse. Also, the difference in performance for the two heuristics for this scenario is relatively minor.

A second question is, how many SDN switches must be deployed before one can realize a logical SDN over the entire network-in other words, every port as an SDN port.

**Scenario 2:** First, it is assessed how feasibility depends on deployment purely in terms of the forwarding resources, namely, flow table and VLAN ID capacity and in terms of path stretch. Then, the constraints of link capacity and traffic demand are considered. With regards to the link utilization when considering waypoint enforcement of SDN ports, a partial deployment feasible is not considered whenever any projected link exceeds 75% of its nominal link capacity.

**Observations 2:** Figure 5(b) shows the feasible regions in which all ports can be realized as SDN ports according to different resource constraints and upgrade strategies when 10 iterations with different random seeds for VOL and DEG and 100 for RAND were run. The main observation is that the large variance in the number of deployed switches required by the random switch selection strategy, indicates that planning the deployment is a clear requirement for effective realization of the logical SDN.

Expectedly, the number of switches required, depends on the capacity of the flow tables and the VLAN constraints. Of particular note, a deployment built of switches with small flow table capacity (1k) suffers more significantly than one that is constrained by insufficient VLAN ID space. Once the traffic matrices were accounted for, it was found that 30 to 40 switches are sufficient to realize a full logical SDN. Under these conditions, it was observed from repeated experiments that the highest average path stretch is at 1.007. The highest maximum path stretch is between 9 and 10. The maximum of the 99th percentile is between 1.2 and 1.4.

**Scenario 3:** The third experiment investigates the impact of SDN waypoint enforcement on traffic. Realistic resource constraints were considered, namely 1024 VLAN IDs and 10K flow table entries. This scenario has potentially the most severe impact on link utilization and path stretch.

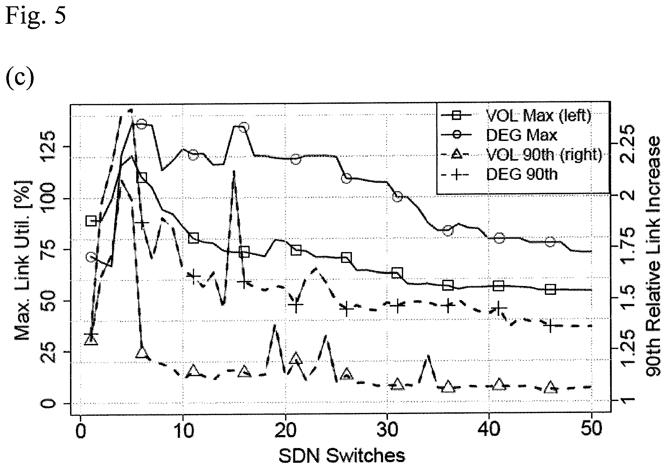

**Observations 3:** Figure 5(c) shows the maximum absolute link utilization over all links (left y-axis), for two switch deployment strategies VOL and DEG, as the number of upgraded switches increases. In addition, it shows the 90th percentile of the relative link utilization increase from the original load projection (right y-axis). The major take away from Figure 5(c) is that Panopticon performs rather well in terms of both absolute and relative link utilization. When only a small number of legacy switches are upgraded, the maximum link utilization yields infeasible solutions. However, after 30 switches are upgraded using any of the two strategies, the maximum link utilization remains at reasonable levels. Moreover, the relative increase for the 90th percentile of all links in the network is modest at below a factor of 1.5.

**Scalability** The key scaling factor of our system is the number of flow table entries-which is problematic when many wildcard matching rules are needed. Panopticon can leverage recent work on Palette (see Y. Kanizo, D. Hay, and I. Keslassy, "Palette: Distributing tables in software-defined networks", in INFO COM 2013) which proposes an approach to decompose large SDN tables into small ones and then distribute them across the network, while preserving the overall SDN policy semantics. Furthermore, as was demonstrated in B. Stephens, A. Cox, W. Felter, C. Dixon, and J. Carter, "PAST: Scalable Ethernet for data centers", in CoNEXT, 2012, it is possible to use programmable MAC tables to off-load the TCAM and therefore improve scalability.

With the present invention, a network architecture for realizing an SDN control plane in a transitional network is provided. This includes a scalable mechanism for extending SDN capabilities to legacy devices. Further the system-level feasibility of this approach was demonstrated with a prototype evaluation. Trough an experimental evaluation with hardware switches it was shown that the Panopticon implementation: *(i)* has no negative impact on application performance and *(ii)* recovers from link failures within a few seconds. Finally, a simulation-driven feasibility study was conducted using real enterprise network topologies (with over 1500 switches) and traffic traces. It was found that with only a few SDN switches (∼ 30-40), it becomes possible to operate an enterprise as a single SDN while meeting key practical constraints.

Other aspects, features, and advantages will be apparent from the summary above, as well as the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfill the functions of several features recited in the claims. Any reference signs in the claims should not be construed as limiting the scope.

## Claims

1. A method of operating a network comprising legacy switches and software-defined networking, SDN, switches, wherein the legacy switches and the SDN switches comprise a plurality of switchports, the method being performed by an SDN controller and comprising the following steps:
abstracting the network into a logical software-defined network by designating the plurality of switchports in the network into a set of SDN ports and a set of legacy ports and
dividing the network into a plurality of cell blocks, wherein each cell block consists of legacy switches that form a connected component of the network when considered without the SDN switches, and wherein the border of each one of the cell blocks consists of the SDN switches among the plurality of SDN switches in the network that are adjacent to the respective cell block;
defining a spanning tree within each cell block and assigning a respective unique identification to the respective spanning tree, wherein the unique identifications of the spanning trees are reused across different ones of the cell blocks and wherein the unique identifications are VLAN IDs; and
controlling the network such that traffic between two communicating ones of said designated SDN ports passes through at least one of the SDN switches by isolating the traffic in the network to the spanning trees defined within each one of the cell blocks using the VLAN IDs, wherein each one of the spanning trees provides a path from each SDN port to every switch in the border of the cell block.

2. A network comprising
a plurality of legacy switches and a plurality of software defined networking, SDN, switches, wherein the legacy switches and the SDN switches comprise a plurality of switchports, and an SDN controller adapted
to abstract the network into a logical software-defined network by designating the plurality of switchboards in the network into a set of SDN ports and a set of the legacy switchports,
to divide the network into a plurality of cell blocks, wherein each of the cell blocks consists of legacy switches that form a connected component of the network when considered without the SDN switches, and wherein the border of each one of the cell blocks consists of the SDN switches among the plurality of SDN switches in the network that are adjacent to the respective cell block;
the SDN controller further adapted
to define a respective spanning tree within each cell block and to assign a respective unique identification to the spanning trees within each cell block, wherein the unique identifications are reused across different ones of the cell blocks and wherein the unique identifications are VLAN IDs;
and the SDN controller further adapted to control the network such that traffic between two communicating ones of said designated SDN ports passes through at least one of the SDN switches by isolating the traffic in the network to the spanning trees defined within each one of the cell blocks using the VLAN IDs, wherein each one of the spanning trees provides a path from each SDN port to every switch in the border of the cell block.

## Patentansprüche

1. Verfahren zum Betreiben eines Netzwerks, das Altswitches und softwaredefinierte Vernetzungs-, SDN-, Switches aufweist, wobei die Altswitches und die SDN-Switches mehrere Switchports aufweisen, wobei das Verfahren durch einen SDN-Controller ausgeführt wird und die folgenden Schritte aufweist:
Abstrahieren des Netzwerks in ein logisches softwaredefiniertes Netzwerk durch Zuordnen der mehreren Switchports im Netzwerk zu einem Satz von SDN-Ports und einem Satz von Altports und
Unterteilen des Netzwerks in mehrere Zellblöcke, wobei jeder Zellblock aus Altswitches besteht, die eine verbundene Komponente des Netzwerks bilden, wenn sie ohne die SDN-Switches betrachtet werden, und wobei die Grenze von jedem der Zellblöcke aus den SDN-Switches unter den mehreren SDN-Switches im Netzwerk besteht, die zum jeweiligen Zellblock benachbart sind;
Definieren eines aufspannenden Baums innerhalb jedes Zellblocks und Zuweisen einer jeweiligen eindeutigen Identifikation zum jeweiligen aufspannenden Baum, wobei die eindeutigen Identifikationen der aufspannenden Bäume über unterschiedliche der Zellblöcke wiederverwendet werden und wobei die eindeutigen Identifikationen VLAN-IDs sind; und
Steuern des Netzwerks, so dass der Verkehr zwischen zwei kommunizierenden der zugeordneten SDN-Ports durch mindestens einen der SDN-Switches geht, durch Isolieren des Verkehrs im Netzwerk zu den aufspannenden Bäumen, die in jedem der Zellblöcke definiert sind, unter Verwendung der VLAN-IDs, wobei jeder der aufspannenden Bäume einen Pfad von jedem SDN-Port zu jedem Switch in der Grenze des Zellblocks bereitstellt.

2. Netzwerk, das aufweist:
mehrere Altswitches und mehrere softwaredefinierte Vernetzungs-, SDN-, Switches, wobei die Altswitches und die SDN-Switches mehrere Switchports aufweisen, und einen SDN-Controller, der eingerichtet ist:
das Netzwerk in ein logisches softwaredefiniertes Netzwerk zu abstrahieren, durch Zuordnen der mehreren Switchports im Netzwerk zu einem Satz von SDN-Ports und einem Satz von Altswitchports,
das Netzwerk in mehrere Zellblöcke zu unterteilen, wobei jeder der Zellblöcke aus Altswitches besteht, die eine verbundene Komponente des Netzwerks bilden, wenn sie ohne die SDN-Switches betrachtet werden, und wobei die Grenze von jedem der Zellblöcke aus den SDN-Switches unter den mehreren SDN-Switches im Netzwerk besteht, die zum jeweiligen Zellblock benachbart sind;
wobei der SDN-Controller ferner eingerichtet ist, einen jeweiligen aufspannenden Baum innerhalb jedes Zellblocks zu definieren und eine jeweilige eindeutige Identifikation zu den aufspannenden Bäumen innerhalb jedes Zellblocks zuzuweisen, wobei die eindeutigen Identifikationen über unterschiedliche der Zellblöcke wiederverwendet werden und wobei die eindeutigen Identifikationen VLAN-IDs sind;
und der SDN-Controller ferner eingerichtet ist, das Netzwerk so zu steuern, dass der Verkehr zwischen zwei kommunizierenden der zugeordneten SDN-Ports durch mindestens einen der SDN-Switches geht, durch Isolieren des Verkehrs im Netzwerk zu den aufspannenden Bäumen, die in jedem der Zellblöcke definiert sind, unter Verwendung der VLAN-IDs, wobei jeder der aufspannenden Bäume einen Pfad von jedem SDN-Port zu jedem Switch in der Grenze des Zellblocks bereitstellt.

## Revendications

1. Procédé de fonctionnement d'un réseau comprenant des commutateurs hérités et des commutateurs de réseau défini par logiciel SDN, les commutateurs hérités et les commutateurs SDN comprenant une pluralité de ports de commutation, ledit procédé étant exécuté par un contrôleur SDN et comprenant les étapes suivantes :
abstraction du réseau en un réseau logique défini par logiciel par désignation de la pluralité de ports de commutation du réseau en un ensemble de ports SDN et un ensemble de ports hérités, et
division du réseau en une pluralité de blocs de cellules, chaque bloc de cellules consistant en des commutateurs hérités formant un composant connecté du réseau, considéré sans les commutateurs SDN, et la limite de chacun des blocs de cellules consistant en les commutateurs SDN adjacents au bloc de cellules respectif parmi la pluralité de commutateurs SDN du réseau ;
définition d'un arbre maximal à l'intérieur de chaque bloc de cellules et attribution d'une identification unique respective à l'arbre maximal respectif, les identifications uniques des arbres maximaux étant réutilisées dans différents blocs de cellules et les identifications uniques étant des ID de VLAN ; et
commande du réseau de sorte que le trafic entre deux ports communiquants parmi les ports SDN désignés passe par au moins un des commutateurs SDN en isolant le trafic dans le réseau aux arbres maximaux définis à l'intérieur de chacun des blocs de cellules au moyen des ID de VLAN, chacun des arbres maximaux réalisant un trajet de chaque port SDN vers chaque commutateur à la limite du bloc de cellules.

2. Réseau, comprenant
une pluralité de commutateurs hérités et une pluralité de commutateurs de réseau défini par logiciel SDN, les commutateurs hérités et les commutateurs SDN comprenant une pluralité de ports de commutation, et un contrôleur SDN prévu
pour abstraire le réseau en un réseau logique défini par logiciel par désignation de la pluralité d'installations de commutation du réseau en un ensemble de ports SDN et un ensemble de ports de commutateurs hérités,
pour diviser le réseau en une pluralité de blocs de cellules, chacun des blocs de cellules consistant en commutateurs hérités formant un composant connecté du réseau, considéré sans les commutateurs SDN, et où la limite de chacun des blocs de cellules consiste en les commutateurs SDN adjacents au bloc de cellules respectif parmi la pluralité de commutateurs SDN du réseau ;
le contrôleur SDN étant en outre prévu
pour définir un arbre maximal respectif à l'intérieur de chaque bloc de cellules et pour attribuer une identification unique respective aux arbres maximaux à l'intérieur de chaque bloc de cellules, les identifications uniques étant réutilisées dans différents blocs de cellules et les identifications uniques étant des ID de VLAN ;
et le contrôleur SDN étant en outre prévu pour commander le réseau de sorte que le trafic entre deux ports communiquants parmi les ports SDN désignés passe par au moins un des commutateurs SDN en isolant le trafic dans le réseau aux arbres maximaux définis à l'intérieur de chacun des blocs de cellules au moyen des ID de VLAN, chacun des arbres maximaux réalisant un trajet de chaque port SDN vers chaque commutateur à la limite du bloc de cellules.
